# EUROPEAN PATENT APPLICATION

(11) **EP 1 148 217 A2**
(43) Date of publication of application: **24.10.2001**
(21) Application number: 01109523.9
(22) Date of filing: 17.04.2001
(51) Int. Cl.: F02B 27/02

(54) **Intake control device for an internal combustion engine**

(30) Priority: 17.04.2000 JP 2000114932
(71) Applicant: YAMAHA HATSUDOKI KABUSHIKI KAISHA, Iwata-shi Shizuoka-ken (JP)
(72) Inventor: Suzuki, Minoru, Yamaha Hatsudoki Kabushiki Kaisha, Iwata-shi, Shizuoka-ken (JP)
(74) Representative: Grünecker, Kinkeldey, Stockmair & Schwanhäusser Anwaltssozietät

(57) **Abstract**

Air intake control device for an internal combustion engine with an intake manifold having at least one air intake pipe for introducing air into at least one air intake passage of a cylinder of said engine, said air intake pipe provides a long, low speed purpose intake pipe and a short, high speed purpose intake pipe, wherein a controllable opening of said high speed purpose intake pipe is branching from said air intake pipe to an outside thereof.

## Description

This invention relates to an air intake control device for an internal combustion engine with an intake manifold having at least one air intake pipe for introducing air into at least one air intake passage of a cylinder of said engine.

Controlling the length of intake pipes to be variable according to engine revolution and obtain inertial supercharging effect is known to be effective to increase output power and torque by increasing intake air amount over a wide revolution range of an engine.

When providing a multi-cylinder V-type engine with an intake control device for controlling the length of intake passages to be variable, it is a common practice to place the intake control device in the space between the two banks of cylinders. Here, the intake control device mounted on the multi-cylinder V-type engine is constituted with an intake manifold made up of long, low speed purpose intake pipes for respective cylinders and short, high speed purpose intake pipes branching off from the midway of the low speed purpose intake pipes, and a common surge tank connected to the manifold. The intake passage length is made variable according to the engine operation state by opening and closing switching valves provided in the high speed purpose intake pipes.

Conventional intake control devices (as disclosed in a JP-A-7-197817) provided on the multi-cylinder V-type engine have a problem: Since the high speed purpose intake pipes are open downward, intake air drawn into the surge tank flows along long roundabout paths in the high speed purpose intake pipes, intake air flow resistance increases, and the margin for increasing the engine output is reduced.

It is an objective of the present invention to provide an air intake control device for an internal combustion engine as indicated above having a compact structure and high engine output.

According to the present invention said objective is solved by an air intake control device for an internal combustion engine with an intake manifold having at least one air intake pipe for introducing air into at least one air intake passage of a cylinder of said engine, said air intake pipe provides a long, low speed purpose intake pipe and a short, high speed purpose intake pipe, wherein a controllable opening of said high speed purpose intake pipe is branching from said air intake pipe to an outside thereof.

Preferred embodiments of the present invention are laid down in further dependent claims.

In the following, the present invention is explained in greater detail with respect to a preferred embodiment in conjunction with the accompanying drawings, wherein:
FIG. 1 shows a vertical section of a V-type multi-cylinder engine employing an intake control device according to an embodiment, and
FIG. 2 shows a vertical section of an intake control device of the embodiment.

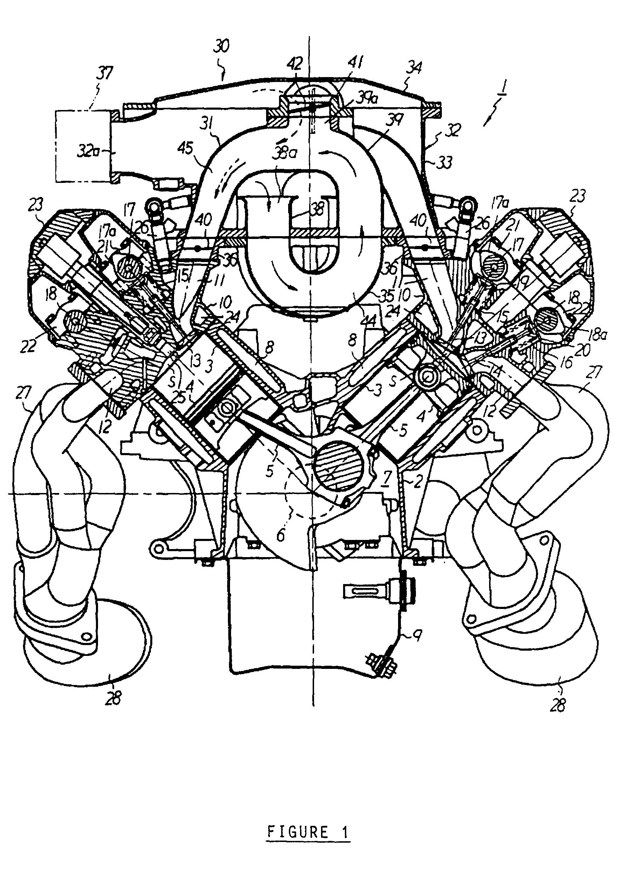

The multi-cylinder V-type engine 1 is a water-cooled, four-stroke cycle, V-type, eight-cylinder engine for automobiles. As shown in FIG. 1, the cylinder block 2 of the engine 1 is provided with two rows of cylinders in a V-shape, with each row consisting of four cylinders arranged side by side in the direction perpendicular to the drawing sheet surface, and with each cylinder provided with a cylinder bore 3. In each bore 3 is placed a piston 4 for free sliding. The pistons 4 are respectively connected through connecting rods 5 to a crankshaft 6. In FIG.1, The crankshaft 6 is placed in a crankcase 7 and extends in the direction perpendicular to the drawing sheet surface. Linear reciprocal movements of the pistons 4 are converted through the connecting rods 5 to the rotary motion of the crankshaft 6. A water jacket 8 for coolant water to flow through is formed around the cylinder bores 3 in the cylinder block 2.

An oil pan 9 covers from under the cylinder block 2. The top portions of the V-shaped cylinder rows of the cylinder block 2 are respectively covered with cylinder heads 10. Each cylinder head 10 is provided with intake passages 11, one for each cylinder, inside the V shape. Exhaust passages 12, one for each cylinder, are formed outside the V shape. The intake passages 11 and the exhaust passages 12 are respectively opened and closed with intake and exhaust valves 13 and 14 according to appropriate timing to exchange gasses in the cylinder bores 3.

Namely, the intake and exhaust valves 13 and 14 are inserted for free sliding in the cylinder head 10 and constantly forced toward closing side with valve springs 15 and 16.

In FIG.1, an intake camshaft 17 and an exhaust camshaft 18 are placed on the intake side and the exhaust side of the top surface of the cylinder head 10, rotatably, parallel to each ether, and extending in the direction perpendicular to the drawing sheet surface. The intake camshaft 17 and the exhaust camshaft 18 respectively have integrally formed intake cams 17a and exhaust cams 18a in contact with valve lifters 19 and 20 respectively covering the top ends of the intake and exhaust valves 13 and 14. Upper halves of the intake camshaft 17 and the exhaust camshaft 18 are respectively supported with bearing caps 21 and 22 for free rotation. The intake camshaft 17, the exhaust camshaft 18, and the bearing caps 21 and 22 are covered from above with head covers 23, one for each cylinder head 10.

As the V-type multi-cylinder engine 1 is started and the crankshaft 6 is drive to rotate, the rotation of the crankshaft 6 is transmitted through a transmitting mechanism (not shown) to both of the intake and exhaust camshafts 17 and 18, and the intake and exhaust camshafts 17 and 18 are driven to rotate at a specified speed (half the speed of the crankshaft 6). As the intake and exhaust camshafts 17 and 18 are driven to rotate in this way, the intake and exhaust cams 17a and 18a formed integrally with those camshafts push the valve lifters 19 and 20 against the urging forces of the valve springs 15 and 16 to push-open the intake valves 13 and the exhaust valves 14, so that gas is exchanged in each cylinder bore 3 as required.

A water jacket 24 for coolant water to flow through is formed around the intake passage 11 and the exhaust passage 12 for each cylinder head 10. An ignition plug 25 is screw-attached to each cylinder head 10, in a peak position of the cylinder. The fore-end, electrode portion of each ignition plug 25 is located in the peak part of each combustion chamber S. An injector 26 for each cylinder is attached to the intake side of each cylinder head 10. The fuel injection nozzle (not shown) formed at the fore-end of each injector 26 is open at each intake passage 11.

The exhaust passages 12 formed in each cylinder head 10 are respectively connected to exhaust pipes which are joined together to form an exhaust manifold 27. The exhaust manifold 27 is connected to an exhaust muffler 28.

In the V-type multi-cylinder engine 1 of this embodiment, an intake control device 30 is placed in the space formed between two, mutually opposing, V-shaped rows of cylinders.

The intake control device 30 is made up of an intake manifold 31 connected to intake passages 11 of each cylinder head 10, and a surge tank 32 which surrounds the intake manifold 31. The surge tank 32 is constituted with a tank main part 33, a cover 34 which covers from above the tank main part 33, U-shape intake pipes 35 formed on the underside of the tank main part 33, and valve bodies 36 placed on both sides of the U-shape intake pipes 35. A throttle body 37 is attached to a suction port 32a opening on one side of the surge tank 32. The throttle body 37 has a built-in throttle valve (not shown) to be opened and closed by accelerator operation, and is connected to an air cleaner (not shown).

The intake manifold 31 is made up of the intake pipes 35, one for each cylinder, and intake pipes 38 and 39 connected to the intake pipe 35. The shorter intake pipe 38 is positioned upright with its bell-mouthed upper end opening 38a (suction port of a low speed purpose intake pipe 44 which will be described later) being open upward in the surge tank 32. Incidentally, the intake pipes 38 and 39 are formed as a single part, with their underside connected to the intake pipe 35, to constitute the intake manifold 31.

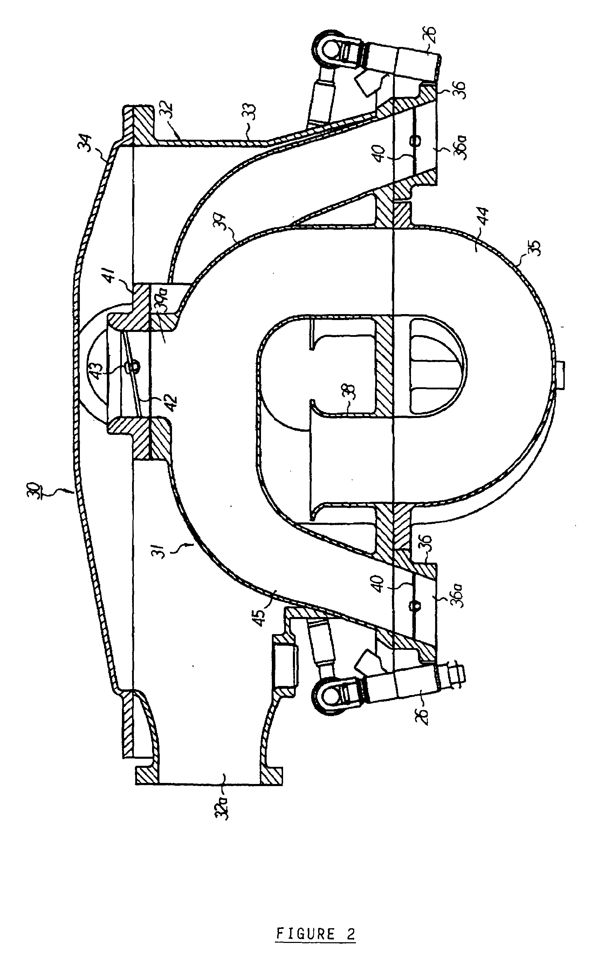

The intake pipe 39 is formed in generally inverted U shape, with its one end connected to the intake pipe 35 and the other end connected to an intake passage 36a (FIG. 2) formed in the valve body 36. In each valve body 36 is installed a tumble-control valve 40 controlled to open and close with an engine control unit (hereinafter called ECU, not shown).

A suction port 39a (suction port of a high speed purpose intake pipe 45 which will be described later) is formed in the middle (upper position on the engine center line) of each of the intake pipes 39, one for each cylinder, opening upward in the upper part within the surge tank 32. Each suction port 39a is connected to a valve body 41. Each valve body 41 is provided with a switching valve 42 for making and breaking communication between the low speed purpose intake pipe 44 and the high speed purpose intake pipe 45, both will be described later. Said suction port 39a and said switching valve 42 are constituting a controllable opening. The switching valves 42 are opened and closed with a common valve shaft 43 disposed perpendicular to the drawing surface of FIGs. 1 and 2. The valve shaft 43 is driven with an actuator (not shown) under the control of the ECU.

Therefore, the intake manifold 31 comprises the long, low speed purpose intake pipe 44 with a continuous length made up of the intake pipes 38, 35, and 39; and the short, high speed purpose intake pipe 45 branching off from the midway of the low speed purpose intake pipe 44. The high speed purpose intake pipe 45 is constituted with part (about half the length) of the intake pipe 39. The suction port 38a of the low speed purpose intake pipe 44 and the suction port 39a of the high speed purpose intake pipe 45 are both open upward within the surge tank 32.

Next, the function of the V-type multi-cylinder engine 1 employing the intake control device 30 constituted as described above is described.

When the V-type multi-cylinder engine 1 is started and a suction stroke begins with the piston 4 moving down in the cylinder bore 3 in the cylinder, the intake valve 13 is opened, fresh air is drawn from the air cleaner (not shown) with a negative pressure produced in the cylinder bore 3, passed through the throttle body 37, metered with a throttle valve (not shown), and caused to flow into the surge tank 32.

Here, when the engine is operating in the low speed range with the engine revolution detected with a revolution sensor (not shown) being below a specified value, the switching valve 42 controlled with the ECU to open and close is closed as shown, and fresh air drawn into the surge tank 32 flows through the long, low speed purpose intake pipe 44 as indicated with the solid line arrow in FIG. 1. That is, fresh air in the surge tank 32 is drawn from the suction port 38a of the intake pipe 38 constituting the low speed purpose intake pipe 44, and flows downward, is bent in the U-shape with the intake pipe 35, flows upward, is bent in the inverted U-shape with the intake pipe 39, and flows through the intake passage 36a of the valve body 36 to the intake passage 11 formed in the cylinder head 10.

While the fresh air is flowing through the long, low speed purpose intake pipe 44 and the intake passage 11 in the cylinder head 10, a specified amount of fuel is injected from the injector 26 to the intake passage 11. As a result, the fresh air and sprayed fuel are mixed together to form mixture of an intended air-to-fuel ratio. The mixture passes around the intake valve 13 and flows into the cylinder bore 3. In this way, when the engine is operating in the low speed range with its revolution low, the fresh air flows through the long, low speed purpose intake pipe 44, and so the intended inertial supercharging effect is produced to increase the output power and torque of the engine. Incidentally, appropriate tumbling effect is given to the mixture entering the cylinder bore 3 with the tumble-control valve 40.

And, before the piston 4 passes the bottom dead center (BDC), the exhaust valve 14 is closed. In a compression stroke with the piston 4 passing the BDC and moving up within the cylinder bore 3, also the intake valve 13 is closed, and the mixture drawn into the cylinder bore 3 is compressed with the piston 4. Immediately before the piston 4 reaching the top dead center (TDC), the mixture is ignited with the ignition plug 25 and burned. In the combustion stroke with the mixture burning, high pressure is produced in the combustion chamber S. The piston 4, receiving the high pressure on its top surface, passes the TDC and moves down within the cylinder bore 3. When the engine operation moves on to the exhaust stroke as the piston 4 passes the BDC and moves up, in the cylinder bore 3 the exhaust valve 14 opens to let out the burned gas produced as a result of burning the mixture to the atmosphere through the exhaust passage 12, the exhaust manifold 27, and the exhaust muffler 28.

Thereafter, the cycle of the above four strokes is repeated, so that the operation of the V-type multi-cylinder engine 1 is continued.

On the other hand, in the high speed range of the engine with its revolution detected with the revolution sensor (not shown) exceeding a specified value, the switching valve 42 controlled with the ECU to open and close is opened as shown with the broken line in FIG. 1, and the suction port 39a formed in the midway of the intake pipe 39 is opened at the upper part in the surge tank 32.

Thus, in the high speed range with a high engine revolution, most of the fresh air flowing into the surge tank 32 flows as shown with the broken line in FIG. 1 through the short, high speed purpose intake pipe 45 having less flow resistance. That is, fresh air in the surge tank 32 is drawn from the suction port 39a opening at the midway of the intake pipe 39, flows through a partial length of the intake passage 39, and flows through the intake passage 36a of the valve body 36 to the intake passage 11 of the cylinder head 10. While the fresh air is flowing through the intake passage 11, a specified amount of fuel is injected from the injector 26 to the intake passage 11, fresh air and injected fuel are mixed together to form mixture of an intended air-to-fuel ratio. The mixture passes around the intake valve 13 and flows into the cylinder bore 3 for combustion in the combustion chamber S.

Thus, in the high speed range with a high engine revolution, since fresh air flows through the short, high speed purpose intake pipe 45, intended inertial supercharging effect is produced to increase the output power and torque of the engine. Also in the high speed range, appropriate tumbling effect is given with the tumble-control valve 40 to the mixture entering the cylinder bore 3.

In this embodiment, the suction port 39a of the high speed purpose intake pipe 45 of the intake manifold 31 is made to open upward, and that the suction port 39a is made to open outside the flow line of the fresh air shown with the solid line arrow, at low speed purpose intake pipe 44 in FIG. 1. As a result, curvature of the high speed purpose intake pipe 45 (intake pipe 39) is small, and so the fresh air flows smoothly from the intake port 39a into the high speed purpose intake pipe 45, and the curvature of the fresh air drawn through the surge tank 32 into the high speed purpose intake pipe 45 is small, which reduces the flow resistance of the fresh air and further increases the engine output.

While the above description is made about an intake control device for a V-type, eight-cylinder engine for automobiles, this teaching may also be applied to any other V-type, multi-cylinder engines. Moreover, the engine described above is provided with one intake valve and one exhaust valve per cylinder. However, the respective teaching can be also applied to a multi valve engine having more than one intake valve and one exhaust valve per cylinder.

As is clear from the above description, this embodiment teaches an intake control device for a multi-cylinder V-type engine, with multiple cylinders arranged in two banks forming a V-shape, with an intake manifold and a common surge tank connected to said intake manifold, both disposed between said V-shaped banks, said intake manifold comprising; long, low speed purpose intake pipes and short, high speed purpose intakes pipes branching from the midway of the low speed purpose intake pipes, each allocated to each cylinder; and with switching valves, for making and breaking communication between said low speed and high speed purpose intake pipes, opened and closed depending on the operating state of the engine. In the above-described engine, the suction ports of the low speed and high speed purpose intake pipes are open to the interior of said surge tank and that the suction ports of the high speed purpose intake pipes are open upward.

Since the suction ports of the low speed and high speed purpose intake pipes are open to the interior of said surge tank and that the suction ports of the high speed purpose intake pipes of the intake manifold are open upward, the curvature of the high speed purpose intake pipes is made small, the roundabout path of intake air drawn into the surge tank and flowing through the high speed purpose intake pipes is made shorter, intake air flow resistance is held low, and the engine output is increased. As a result, effects are provided that the engine output is increased while restricting the flow resistance of the intake air.

In the intake control device for a multi-cylinder V-type engine according to the embodiment, the intake moths of the low speed purpose intake pipes are open upward. The suction ports of the high speed purpose intake pipes are open along the outside of intake air flow in the low speed purpose intake pipes.

The embodiment described above teaches an air intake control device for an internal combustion engine with an intake manifold 31 having at least one air intake pipe for introducing air into at least one air intake passage 11 of a cylinder of said engine. Said air intake pipe provides a long, low speed purpose intake pipe 44 and a short, high speed purpose intake pipe 45. A controllable opening 39a, 42 of said high speed purpose intake pipe 45 is branching from said air intake pipe to an outside thereof. Said controllable opening 39a, 42 and said air intake passage 11 of the cylinder open in substantially a same direction.

The controllable opening 39a, 42 of said high speed purpose intake pipe 45 is open to the outside of the intake pipe along an intake air flow in the low speed purpose intake pipes 44. A suction port 38a of the low speed purpose intake pipe 44 and said controllable opening 39a, 42 of said high speed purpose intake pipe 45 open in substantially the same direction.

The air intake control device for an internal combustion engine according to the embodiment comprises a common surge tank 32 connected to said intake manifold 31. The controllable opening 39a, 42 of the high speed purpose intake pipe 45 and the suction port 38a of the low speed purpose intake pipe 44 are open to an interior of said surge tank 32. Said intake manifold 31 is at least partly accommodated in said surge tank 32.

The surge tank 32 of the air intake control device comprises a tank main part 33 and said air intake pipe comprises a first U-shape intake pipe section 35 provided outside of the tank main part 33 and a second U-shape intake pipe section 39 provided inside of the tank main part 33. The first U-shape intake pipe section 35 connects the second U-shape intake pipe section 39 with the surge tank 32.

The controllable opening 39a, 42 of said high speed purpose intake pipe 45 is provided on the second U-shape intake pipe section 39. Said controllable opening 39a, 42 is open to said surge tank 32.

The air intake control device for an internal combustion engine according to the embodiment further comprises a third intake pipe section 38 provided inside of the tank main part 33. Said third intake pipe section 38 connects the first U-shape intake pipe section 35 with the surge tank 32. Said third intake pipe section 38 is substantially straight.

The air intake control device according to the embodiment is provided for a multi-cylinder V-type engine with two cylinder banks forming a V-shape. The intake manifold 31 of the air intake control device comprises at least two of said air intake pipes, at least one thereof for each cylinder bank, wherein said intake manifold 31 is disposed between said cylinder banks.

## Claims

1. Air intake control device for an internal combustion engine with an intake manifold (31) having at least one air intake pipe for introducing air into at least one air intake passage (11) of a cylinder of said engine, said air intake pipe provides a long, low speed purpose intake pipe (44) and a short, high speed purpose intake pipe (45), wherein a controllable opening (39a, 42) of said high speed purpose intake pipe (45) is branching from said air intake pipe to an outside thereof.

2. Air intake control device for an internal combustion engine according to claim 1, **characterized in that** said controllable opening (39a, 42) and said air intake passage (11) of the cylinder open in substantially a same direction.

3. Air intake control device for an internal combustion engine according to claim 1 or 2, **characterized in that** the controllable opening (39a, 42) of said high speed purpose intake pipe (45) is open to the outside of the intake pipe along an intake air flow in the low speed purpose intake pipes (44).

4. Air intake control device for an internal combustion engine according to at least one of the claims 1 to 3, **characterized in that** a suction port (38a) of the low speed purpose intake pipe (44) and said controllable opening (39a, 42) of said high speed purpose intake pipe (45) open in substantially the same direction.

5. Air intake control device for an internal combustion engine according to at least one of the claims 1 to 4, **characterized by** a common surge tank (32) connected to said intake manifold (31), wherein the controllable opening (39a, 42) of the high speed purpose intake pipe (45) and the suction port (38a) of the low speed purpose intake pipe (44) are open to an interior of said surge tank (32).

6. Air intake control device for an internal combustion engine according to claim 5, **characterized in that** said intake manifold (31) is at least partly accommodated in said surge tank (32).

7. Air intake control device for an internal combustion engine according to claim 5 or 6, **characterized in that** the surge tank (32) comprises a tank main part (33), and said air intake pipe comprises a first U-shape intake pipe section (35) provided outside of the tank main part (33) and a second U-shape intake pipe section (39) provided inside of the tank main part (33), wherein the first U-shape intake pipe section (35) connects the second U-shape intake pipe section (39) with the surge tank (32).

8. Air intake control device for an internal combustion engine according to claim 7, **characterized in that** the controllable opening (39a, 42) of said high speed purpose intake pipe (45) is provided on the second U-shape intake pipe section (39), wherein said controllable opening (39a, 42) is open to said surge tank (32).

9. Air intake control device for an internal combustion engine according to claim 7 or 8, **characterized in that** a third intake pipe section (38) is provided inside of the tank main part (33), wherein said third intake pipe section (38) connects the first U-shape intake pipe section (35) with the surge tank (32).

10. Air intake control device for an internal combustion engine according to claim 9, **characterized in that** said third intake pipe section (38) is substantially straight.

11. Air intake control device for an internal combustion engine according to at least one of the claims 1 to 10, wherein said engine is a multi-cylinder V-type engine with two cylinder banks forming a V-shape, **characterized in that** the intake manifold (31) comprises at least two of said air intake pipes, at least one thereof for each cylinder bank, wherein said intake manifold (31) is disposed between said cylinder banks.
